# EUROPEAN PATENT SPECIFICATION

(11) **EP 2 865 539 B1**
(45) Date of publication and mention of the grant of the patent: **02.08.2017**
(21) Application number: 13807351.5
(22) Date of filing: 19.06.2013
(51) Int. Cl.: B60B 27/02, F16C 19/38, F16C 35/067, F16C 41/04, B60B 27/00, F16C 33/76

(54) **BEARING ASSEMBLY WITH SAFETY BUSHING, AND INSERTION METHOD**
LAGERANORDNUNG MIT SICHERHEITSBUCHSE UND EINSETZVERFAHREN
ENSEMBLE ROULEMENT À DOUILLE DE SÉCURITÉ ET PROCÉDÉ D'INSERTION

(30) Priority: 20.06.2012 ES 201230966
(43) Date of publication of application: 29.04.2015
(73) Proprietor: Fersa Innova, S.L.U., 50197 Zaragoza (ES)
(72) Inventor: SALVADOR LOU, Javier, E-50197 Zaragoza (ES); GIMENO GRACIA, David, E-50197 Zaragoza (ES); SERPENTINO, Alexandre, I-50197 Zaragoza (IT); SANTO DOMINGO TAJADURA, Sergio, E-50197 Zaragoza (ES)
(74) Representative: Schäfer, Matthias W.
(86) International application number: PCT/ES2013/070395
(87) International publication number: WO 2013/190160

(56) References cited:
- EP-A1- 2 400 172
- WO-A1-97/42425
- WO-A1-2004/099637
- WO-A1-2004/099637
- WO-A1-2007/115539
- WO-A1-2007/115539
- WO-A1-2012/041598
- WO-A1-2013/160015
- DE-A1- 4 235 611
- US-A1- 2010 320 832

## Description

As indicated in the title, this description relates to a bearing assembly with safety bushing and insertion method, comprising two pre-assembled tapered roller bearing units that can be replaced on the wheel hub of commercial vehicles. Each unit comprises an outer ring and an inner ring, with several tapered rollers in a cage and an identifying box securing the outer ring between them, as well as **comprising** a safety bushing, similar in size to the pre-assembled units, fitted between the inner and outer rings and making up a compact assembly that can be used as a tool for mounting the pre-assembled units on the hub and for mounting the retainers in the cavity between the inner ring and the hub. In addition, a seal is fitted on one of the pre-assembled units through a four-step process.

### Background of the Invention

Currently, there is a wide range of tapered roller bearings comprising an outer ring, an inner ring, a cage with several tapered rollers, a box and a seal, which are mounted on the wheel hub of industrial vehicles in different ways depending on roller bearing configuration.

One of these includes using simple tools without any dedicated requirements, inserting the outer ring in the wheel hub in the corresponding box; this is repeated on the opposite side of the hub. Next, the cage with tapered rollers is inserted into the outer ring of one of the sides; this is repeated on the opposite side. Then, the inner ring is inserted into one of the sides and this is repeated on the opposite side. Following, a seal connecting both inner rings by their inside diameter is inserted. The disadvantage of this type of assembly is that it takes nine steps, mainly using non-dedicated tools, increasing assembly times and the corresponding cost in labour.

In order to reduce the number of steps during assembly and the cost of labour in patent WO2007115539, a tapered roller bearing with a cylindrical extension of the outer rings is introduced, so that retainers are below the extension level. This assembly is done with non-dedicated tools but the steps are reduced to three, inserting a roller bearing with all of its components on one side of the hub, and repeating on the opposite side. Next, a safety ring is inserted connecting both inner rings at their inside diameter. The disadvantage is that although the number of assembly steps is significantly reduced, using non-dedicated tools may increase assembly times.

### Description of the Invention

In order to facilitate mounting roller bearings on wheel hubs, a bearing assembly with safety bushing and insertion method has been devised. It comprises a safety bushing between the inner and outer rings of each one of the pre-assembled units making up an easy-to-handle compact assembly and avoiding contact with several tapered rollers located in the cage between the inner and outer rings, hence preventing blows and scratches during transport. The safety bushing also protects the pre-assembled units from contamination factors while being stored and mounted on the hub, which is done in four steps because the tool used is suitable for this type of assembly.

The safety bushing is similar in size to the pre-assembled units and consists of four different surfaces: thrust surface of the outer ring and retainer, axially connecting with the outer ring, moves the pre-assembled unit during assembly and can also be used to axially insert the retainer into the hub; regulator surface that axially secures the safety bushing (8) to the inner ring; drive-up surface that can also be used to axially insert the retainer into the hub; and extraction surface which can be enabled as an option once it has been used as an assembly tool..

The identifying box includes a code that identifies the location of the pre-assembled units on the hub.

The seal consists of a gasket between the inner rings of a bearing, as claimed in Spanish Utility Model U201030569.

In an alternative embodiment, the seal between the inner rings consists of a U-shaped bushing made of metal or a synthetic material, with an O-ring around its inside diameter.

It is a four-step assembly process. After cleaning the hub, a pre-assembled unit is inserted, by the thrust surface of the safety bushing; this is repeated for the other pre-assembled unit reversely and on the opposite side. The inner rings are now facing, or set together through a seal. Next, a retainer is inserted in the cavity between the inner ring of the pre-assembled unit and the hub, by the safety bushing drive-up surface; this is repeated on the opposite side.

The seal is pre-assembled on one of the pre-assembled units only to facilitate later mounting both units on the hub.

### Advantages of the Invention

This bearing assembly with safety bushing offers many advantages over the bearings currently available. The most important one is that thanks to the configuration of the safety bushing, similar in size to the pre-assembled units, it can be used as a tool for mounting the bearing on the hub and for mounting the retainers in the cavity between the inner ring and the hub through a four-step assembly process.

Another important advantage is that the safety bushing prevents contact with several tapered rollers between the inner and outer rings, protecting from blows and scratches during transport as well as from contamination factors during storage and mounting on the hub.

Another advantage of this invention is that the identifying box includes a code that identifies the location of the pre-assembled units on the hub.

Another significant advantage is that retainers are inserted separately into the cavity between the pre-assembled unit and the hub.

Finally, it is worth mentioning that the seal consists of a gasket or an alternative embodiment of a U-shaped bushing with an O-ring.

### Description of Figures

In order to better understand the current invention, a preferred practical embodiment is provided in the enclosed drawings.
Among the drawings, figure -1- shows a section view of the bearing assembly with safety bushing. A seal is fitted on one of the pre-assembled units, showing a retainer next to one of the pre-assembled units.
figure -2- shows an elevation and plan view of the safety bushing.
Figure -3- shows a section view of the hub with a pre-assembled unit, corresponding to the first step of the insertion method. It also shows the position of the safety bushing with its thrust surface on the outer ring of the pre-assembled unit, shown with seal.
Figure -4- shows a section view of the hub with a pre-assembled unit, on the opposite side of the hub, corresponding to the first step of the insertion method. It also shows the position of the safety bushing with its thrust surface on the outer ring of the pre-assembled unit, connected by the inner rings through the seal, in this case.
Figure -5- shows a section view of the hub with a retainer in the cavity between the pre-assembled unit and the hub, corresponding to the third step of the insertion method. It also shows the position of the safety bushing with its drive-up surface for insertion.
Figure -6- shows a section view of the hub with a retainer in the cavity between the pre-assembled unit and the hub, on the opposite side of the hub, corresponding to the fourth step of the insertion method. It also shows the position of the safety bushing with its drive-up surface for insertion.
Figure -7- shows a section view of the hub with the inserted bearing assembly.
Figure -8- shows a design detail of the seal consisting of a gasket, as claimed in Spanish Utility Model U201030569.
Figure -9- shows a design detail of an alternative embodiment of the seal consisting of a U-shaped bushing with an O-ring around its inside diameter.

### Preferred Embodiment of the Invention

The bearing assembly with safety bushing comprises two pre-assembled units (1, 1.1) that can be replaced on the wheel hub (9) of commercial vehicles. Each unit comprises an outer ring (2, 2.1) and an inner ring (3, 3.1), with several tapered rollers (4, 4.1) in a cage and an identifying box (6, 6.1) axially securing the outer ring (2, 2.1), as well as a safety bushing (8) that is a ring similar in size to the pre-assembled units (1, 1.1), fitted between the outer ring (2, 2.1) and the inner ring (3, 3.1), making up a compact assembly that can be used as a tool for mounting the pre-assembled units on the hub (9) and for mounting the retainers (5, 5.1) in the cavity between the pre-assembled unit and the hub (9).

The safety bushing consists of four different surfaces: thrust surface (10) of the outer ring (2, 2.1) and retainer (5, 5.1), axially connecting with the outer ring (2, 2.1). This surface moves the pre-assembled units (1, 1.1) and can also be used to axially insert the retainer (5, 5.1) into the hub (9).
A regulator surface (11) that axially secures the safety bushing (8) to the inner ring (3, 3.1). A drive-up surface (12) that can also be used to axially insert the retainer (5, 5.1) into the hub (9).

And finally, the extraction surface (13) of the safety bushing (8), which can be enabled as an option once it has been used as an assembly tool.

The identifying box (6, 6.1) includes a code that identifies the location of the pre-assembled units (1, 1.1) on the hub (9).

The seal (7) consists of a gasket between the inner rings of a bearing, as claimed in Spanish Utility Model U201030569.

In an alternative embodiment, the seal (7) between inner rings consists of a U-shaped bushing (14) with an O-ring (15) around its inside diameter.

Mounting a tapered roller bearing assembly on a wheel hub is done in four steps:
After cleaning the hub (9), a pre-assembled unit (1) is inserted, by the thrust surface (10) of the safety bushing(8); this is repeated for the other pre-assembled unit (1.1) reversely and on the opposite side. The inner rings are now facing (3, 3.1), or set together through a seal (7, 7.1). Next, a retainer (5.1) is inserted in the cavity between the inner ring (3.1) of the pre-assembled unit (1.1) and the hub (9), by the drive-up surface (12) of the safety bushing (8); this is repeated on the opposite side for the insertion of the retainer (5).

The seal (7, 7.1) is pre-assembled on one of the pre-assembled units (1, 1.1) to facilitate lamounting both units on the hub (9).

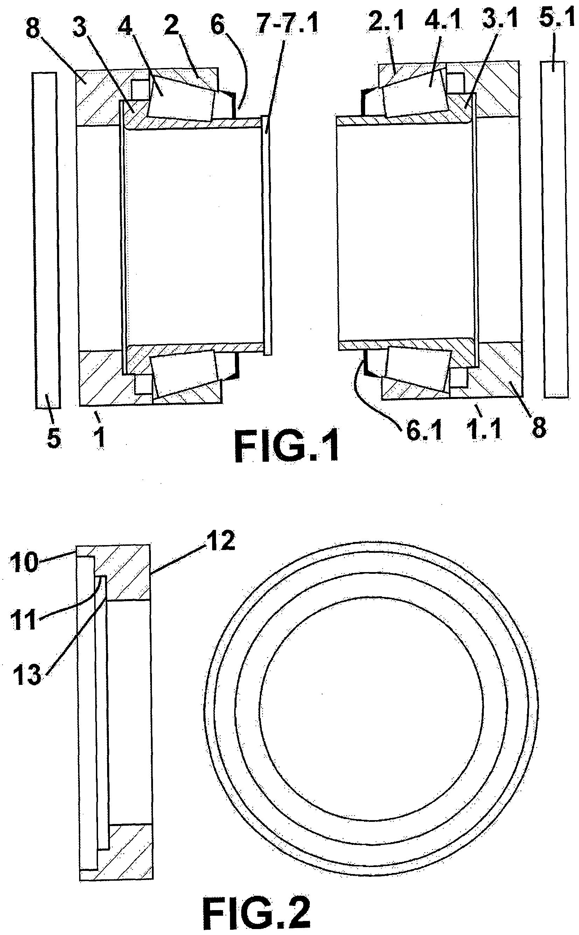

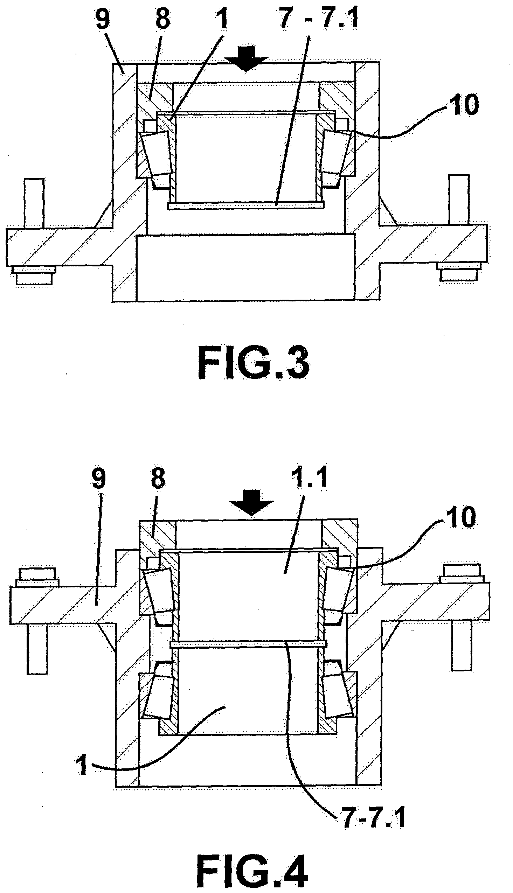

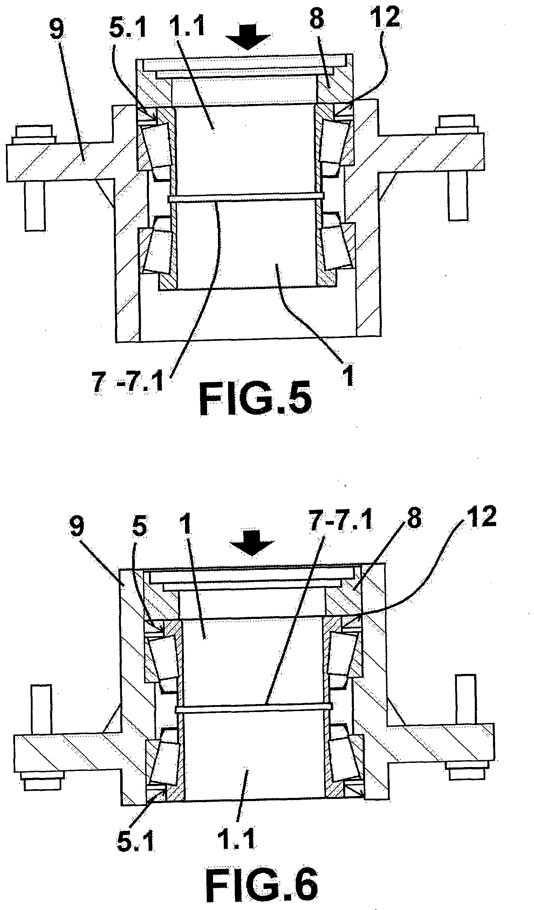

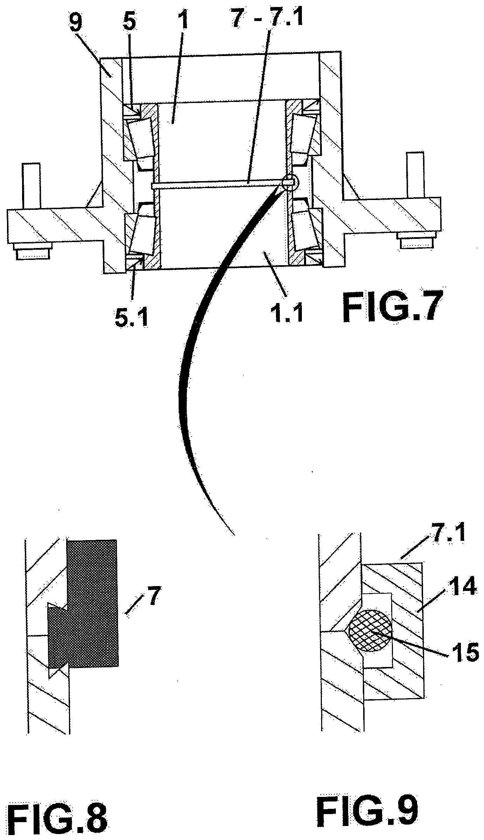

## Claims

1. - Bearing assembly with safety bushing comprising two pre-assembled units (1, 1.1) that can be replaced on the wheel hub (9) of commercial vehicles. Each one comprises
- an outer ring (2, 2.1);
- an inner ring (3, 3.1), with several tapered rollers (4 & 4.1) between them in a cage;
- an identifying box (6, 6.1) axially securing the outer ring (2, 2.1); the bearing assembly with safety bushing comprising: a safety bushing (8) that is a ring similar in size to the pre-assembled units (1, 1.1), made up of four different surfaces: thrust surface (10) of the outer ring (2, 2.1) and retainer (5, 5.1), regulator surface (11) that axially secures the inner ring (3, 3.1), drive-up surface (12) to insert the retainer (5, 5.1) and extraction surface (13) of the safety bushing (8).

2. - Bearing assembly with safety bushing, according to previous claims, comprising one of the two pre-assembled units (1, 1.1) with seal (7, 7.1).

3. - Bearing assembly with safety bushing, according to claim 2, comprising a seal (7.1) between inner rings, which consists of a U-shaped bushing (14) with an O-ring (15) around its inside diameter.

4. - Bearing assembly with safety bushing, according to claim 1, comprising each one of the identifying boxes (6, 6.1) including a code that identifies the location of the tapered roller bearing (1, 1.1) on the hub (9).

5. - Insertion method of a bearing assembly with safety bushing described according to previous claims, comprising the following four steps:
- first, insertion of a pre-assembled unit (1) into the hub (9);
- second, insertion of the other pre-assembled unit (1.1) into the hub (9) facing the previous one and the corresponding inner rings (3, 3.1);
- third, insertion of a first retainer (5)
- fourth, insertion of a second retainer (5.1)
**characterized by**
- the first step in which, after cleaning the hub (9), a pre-assembled unit (1) is inserted, by the thrust surface (10) of the safety bushing (8) on the outer ring (2) of the pre-assembled unit (1), with a seal (7, 7.1) fitted on the inside diameter of the inner ring (3), in this case;
- the second step in which the other pre-assembled unit (1.1) is inserted into the opposite side of the hub (9), by the thrust surface (10) of the safety bushing (8) on the outer ring (2) of the pre-assembled unit (1.1), with the inner rings (3, 3.1) now facing;
- the third step in which the first retainer (5) is inserted in the cavity between the first inner ring (3) of the pre-assembled unit (1) and the hub (9), by the drive-up surface (12) of the safety bushing (8);
- the fourth step in which the second retainer (5.1) is inserted in the cavity between the second inner ring (3.1) of the other pre-assembled unit (1.1) and the hub (9), by the drive-up surface (12) of the safety bushing (8).

6. - Insertion method, according to claim 5, comprising the pre-assembled units (1 & 1.1) connected through the seal (7, 7.1).

## Patentansprüche

1. Lagerbaugruppe mit Sicherungshülse, aufweisend zwei vormontierte Einheiten (1, 1.1), welche an einer Radnabe (9) von Nutzfahrzeugen ausgetauscht werden können, wobei jede von ihnen Folgendes aufweist:
- einen äußeren Ring (2, 2.1);
- einen inneren Ring (3, 3.1) mit mehreren konischen Wälzkörpern (4 & 4.1) zwischen ihnen in einem Käfig;
- einen identifizierenden Kasten (6, 6.1), welcher den äußeren Ring (2, 2.1) axial sichert;
wobei die Lagerbaugruppe mit Sicherungshülse Folgendes aufweist: eine Sicherungshülse (8), welche ein Ring von ähnlicher Größe wie die vormontierten Einheiten (1, 1.1) ist, welcher aus vier verschiedenen Flächen gebildet ist; eine Druckfläche (10) des äußeren Rings (2, 2.1) und Halterings (5, 5.1), eine Regulier-Fläche (11), welche den inneren Ring (3, 3.1) axial sichert, eine Auflauffläche (12), um den Haltering (5, 5.1) einzusetzen, und eine Abziehfläche (13) der Sicherungshülse (8).

2. Lagerbaugruppe mit Sicherungshülse nach dem vorhergehenden Anspruch, aufweisend eine der zwei vormontierten Einheiten (1, 1.1) mit einer Dichtung (7, 7.1).

3. Lagerbaugruppe mit Sicherungshülse nach Anspruch 2, aufweisend eine Dichtung (7.1) zwischen inneren Ringen, welche aus einer U-förmigen Hülse (14) mit einem O-Ring (15) um deren inneren Durchmesser herum besteht.

4. Lagerbaugruppe mit Sicherungshülse nach Anspruch 1, wobei jeder der identifizierenden Kästen (6, 6.1) einen Code aufweist, welcher den Ort des Kegelrollenlagers (1, 1.1) an der Nabe (9) identifiziert.

5. Verfahren zum Einsetzen einer Lagerbaugruppe mit Sicherungshülse, nach einem der vorhergehenden Ansprüche, aufweisend die folgenden vier Schritte:
- erstens, Einsetzen einer vormontierten Einheit (1) in die Nabe (9);
- zweitens, Einsetzen der anderen vormontierten Einheit (1.1) in die Nabe (9), welche der vorhergehenden und den entsprechenden inneren Ringen (3, 3.1) gegenüber liegt;
- drittens, Einsetzen eines ersten Halterings (5),
- viertens, Einsetzen eines zweiten Halterings (5.1),
**gekennzeichnet durch**
- den ersten Schritt, bei welchem nach Reinigen der Nabe (9) eine vormontierte Einheit (1) durch die Druckfläche (10) der Sicherungshülse (8) auf dem äußeren Ring (2) der vormontierten Einheit (1) eingesetzt wird, wobei in diesem Fall eine Dichtung (7, 7.1) am Innendurchmesser des inneren Rings (3) eingepasst wird;
- den zweiten Schritt, bei welchem die andere vormontierte Einheit (1.1) in die gegenüber liegende Seite der Nabe (9) durch die Druckfläche (10) der Sicherungshülse (8) an dem äußeren Ring (2) der vormontierten Einheit (1.1) eingesetzt wird, wobei die inneren Ringe (3, 3.1) gegenüber liegen;
- den dritten Schritt, bei welchem der erste Haltering (5) in den Hohlraum zwischen dem ersten inneren Ring (3) der vormontierten Einheit (1) und der Nabe (9) durch die Auflauf-Fläche (12) der Sicherungshülse (8) eingesetzt wird;
- den vierten Schritt, bei welchem der zweite Haltering (5.1) in den Hohlraum zwischen dem zweiten inneren Ring (3.1) der anderen vormontieren Einheit (1.1) und der Nabe (9) durch die Auflauf-Fläche (12) der Sicherungshülse (8) eingesetzt wird.

6. Einsetzverfahren nach Anspruch 5, wobei die vormontierten Einheiten (1 & 1.1) durch die Dichtung (7, 7.1) verbunden sind.

## Revendications

1. Un système de roulement avec palier de sécurité comprenant deux unités préassemblées (1, 1.1) qui peuvent être remplacées sur le moyeu de roue (9) de véhicules commerciaux. Chacune d'entre elles comprend
- une bague externe (2, 2.1) ;
- une bague interne (3, 3.1), avec plusieurs rouleaux coniques (4 & 4.1) placés entre les bagues dans une cage ;
- un boîtier d'identification (6, 6.1) pour la sécurisation axiale de la bague externe (2, 2.1) ; le système de roulement avec palier de sécurité comprenant : un palier de sécurité (8) qui est une bague dont la taille est similaire à celle des unités préassemblées (1, 1.1), constituée de quatre surfaces différentes : surface d'appui (10) de la bague externe (2, 2.1) et dispositif d'arrêt (5, 5.1), surface de régulation (11) pour la sécurisation axiale de la bague interne (3, 3.1), surface d'insertion (12) pour l'insertion du dispositif d'arrêt (5, 5.1) et surface d'extraction (13) du palier de sécurité (8).

2. Le système de roulement avec palier de sécurité conformément aux Revendications précédentes, **comprenant** une des deux unités préassemblées (1, 1.1) avec un joint (7, 7.1).

3. Le système de roulement avec palier de sécurité conformément à la Revendication 2, **comprenant** un joint (7.1) entre les bagues internes qui consiste en un palier en forme de U (14) avec un joint torique (15) autour de son diamètre interne.

4. Le système de roulement avec palier de sécurité conformément à la Revendication 1, **comprenant** chacun des boîtiers d'identification (6, 6.1) avec un code identifiant la localisation du palier conique à rouleau (1, 1.1) sur le moyeu (9).

5. Procédé d'insertion d'un système de roulement avec palier de sécurité conformément aux Revendications précédentes, comprenant les quatre étapes suivantes :
- premièrement, insertion d'une unité préassemblée (1) dans le moyeu (9) ;
- deuxièmement, insertion de l'autre unité préassemblée (1.1) dans le moyeu (9) faisant face à la première, et des bagues internes (3, 3.1) correspondantes ;
- troisièmement, insertion d'un premier dispositif d'arrêt (5) ;
- quatrièmement, insertion du second dispositif d'arrêt (5.1)
**caractérisé par**
- la première étape qui prévoit qu'après le nettoyage du moyeu (9), une unité préassemblée (1) est insérée, par la surface d'appui (10) du palier de sécurité (8) sur la bague externe (2) de l'unité préassemblée (1), avec un joint placé sur le diamètre interne de la bague interne, dans ce cas ;
- la deuxième étape qui prévoit l'insertion de l'autre unité préassemblée (1.1) dans le côté opposé du moyeu (9) par la surface d'appui (10) du palier de sécurité (8) sur la bague externe (2) de l'unité préassemblée (1.1), les bagues internes (3, 3.1) étant maintenant face à face ;
- la troisième étape prévoyant l'insertion du premier dispositif d'arrêt (5) dans la cavité entre la première bague interne (3) de l'unité préassemblée (1) et le moyeu (9) par la surface d'insertion (12) du palier de sécurité (8) ;
- la quatrième étape prévoyant l'insertion du second dispositif d'arrêt (5.1) dans la cavité entre la seconde bague interne (3.1) de l'autre unité préassemblée (1.1) et le moyeu (9) par la surface d'insertion (12) du palier de sécurité (8).

6. Procédé d'insertion conformément à la Revendication 5, **comprenant** les unités préassemblées (1, 1.1) connectées par le joint (7, 7.1).
